# EUROPÄISCHE PATENTSCHRIFT

(11) **EP 1 687 591 B1**
(45) Veröffentlichungstag und Bekanntmachung des Hinweises auf die Patenterteilung: **03.03.2010**
(21) Anmeldenummer: 04790477.6
(22) Anmeldetag: 15.10.2004
(51) Int. Cl.: G01D 5/20

(54) **SCHALTUNGSANORDNUNG ZUR INDUKTIVEN WEGMESSUNG**
INDUCTIVE DISPLACEMENT MEASURING CIRCUIT ARRANGEMENT
CIRCUITERIE DE MESURE DE DISTANCE PAR INDUCTION

(30) Priorität: 17.10.2003 DE 10348343
(43) Veröffentlichungstag der Anmeldung: 09.08.2006
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(74) Vertreter: Schönmann, Kurt
(86) Internationale Anmeldenummer: PCT/EP2004/011634
(87) Internationale Veröffentlichungsnummer: WO 2005/036102

(56) Entgegenhaltungen:
- DE-A1- 10 243 631
- FR-A- 2 468 884
- US-A1- 2003 098 686
- US-B1- 6 541 961

## Beschreibung

Die Erfindung bezieht sich auf eine Schaltungsanordnung zur induktiven Wegmessung gemäß dem Oberbegriff des Patentanspruches 1.

Für die Wegmessung in Kraftfahrzeugen werden häufig induktive Wegsensoren eingesetzt, die aus einer Induktionsspule mit zwei Anschlüssen und einem weichmagnetischen Anker bestehen, der in der Induktionsspule verschieblich ist. Die Induktivität der Spule hängt damit von der relativen Stellung des Ankers zur Spule ab, so daß solche Sensoren zur Wegmessung geeignet sind. In der Kraftfahrzeugtechnik werden solche Sensoren häufig eingesetzt, da sie preisgünstig herzustellen sind und gegenüber Umwelteinflüssen, wie Temperaturwechsel, Schüttelbeanspruchung oder Verschmutzung, sehr robust sind. Gegenüber anderen Sensoren, wie Potentiometern, Hallsonden oder optischen Sensoren, ist allerdings die Signalaufbereitung etwas aufwendiger und es ergeben sich auch Probleme bei höheren Anforderungen an die Stabilität bezüglich temperaturabhängiger Signalverfälschungen.

In der US 2003/0098686 A1 wird ein gattungsgemäßer Wegsensor offenbart.

Die Auswertung solcher induktiver Sensoren erfolgt bisher dadurch, daß an den Sensor ein Strom- oder Spannungsimpuls angelegt wird und anhand der Sprungantwort auf die aktuelle Induktivität geschlossen wird. Die für die Ansteuerung der Sensoren verwendeten Halbleiter und Kondensatoren weisen in vielen Schaltungen einen temperaturabhängigen Fehler auf, was die Qualität des Sensorsignals verschlechtert. Auch treten beim Abschalten des Sensors Spannungsspitzen auf, die mit zusätzlichen Löschdioden begrenzt werden müssen, um Schädigungen an anderen Schaltungsteilen zu vermeiden. Da die Kupferleitung der Sensorspulen einen temperaturabhängigen ohmschen Widerstand aufweist, muß bei höheren Anforderungen an die Signalstabilität dieser ohmsche Widerstand und damit indirekt die Temperatur des Sensors erfaßt und zur Fehlerkorrektur herangezogen werden. In der Praxis werden daher induktive Wegsensoren nur für Messungen mit geringer Auflösung bzw. Stabilität verwendet.

Mit der Erfindung sollen die oben beschriebenen Nachteile bei der Signalaufbereitung eines induktiv messenden Sensors beseitigt oder minimiert werden.

Aufgabe der Erfindung ist es daher, die Schaltungsanordnung der eingangs genannten Art dahingehend zu verbessern, daß sie bei einfachem Aufbau stabil mit hohem Auflösungsvermögen arbeitet. Insbesondere sollen keine schnellen Spannungsänderungen oder Abschalt-Spannungsspitzen entstehen. Auch sollen temperaturabhängige Fehler weitestgehend vermieden oder kompensiert werden.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung liegt darin, den Sensor in einer selbstschwingenden Oszillatorschaltung zu betreiben, in welcher der Strom durch die Sensorspule abwechselnd in die eine und die andere Richtung fließt. Die sich dabei einstellende Oszillatorfrequenz ist dabei ein Maß für die Induktivität des Sensors und damit ein Maß für den zu messenden Weg. In einer konkreten Ausgestaltung der Erfindung ist der Sensor zwischen zwei Operationsverstärker geschaltet, von denen der eine als Spannungsfolger geschaltet ist und eine konstante Bezugsspannung am einen Anschluß des Sensors einregelt. Der andere Operationsverstärker wird abwechselnd zwischen zwei Spannungen umgeschaltet, von denen die eine größer und die andere kleiner als die genannten Bezugsspannung ist. Damit wird die Spule des Sensors abwechselnd mit der Differenzspannung aufgeladen bzw. entladen. Das Umschalten der beiden genannten Spannungen erfolgt bei Erreichen vorgegebener Schaltschwellen durch einen als Komparator geschalteten Operationsverstärker, dessen Vergleichseingang ebenfalls zwischen zwei vorgegebenen Vergleichsspannungen umschaltbar ist, so daß dieser Komparator stets stabile Schaltzustände einnimmt.

Nach einer Weiterbildung der Erfindung wird die Temperatur des Sensors indirekt dadurch gemessen, daß der ohmsche Widerstand der Sensorspule ausgewertet wird. Zu diesem Zweck wird über die beiden Operationsverstärker je eine konstante, jedoch unterschiedliche Spannung an die Spule angelegt und der sich nach einer "Sättigungszeit" ergebende Strom als Spannungsabfall an einem Widerstand gemessen, woraus sich die Temperatur des Sensors ableiten und eine temperaturabhängige Fehlerkorrektur durchführen läßt.

Nach einer anderen Weiterbildung der Erfindung können auch mehrere Sensoren der beschriebenen Art unter Verwendung wesentlicher Elemente der Schaltungsanordnung eingesetzt werden, wobei die einzelnen Sensoren einzeln abgefragt werden, beispielsweise in zyklischer Reihenfolge. Auch kann die Temperatur der einzelnen Sensoren abgefragt werden unter Verwendung derselben Bauteile.

Im folgenden wird die Erfindung anhand von Ausführungsbeispielen im Zusammenhang mit der Zeichnung ausführlicher erläutert. Es zeigt:
Fig. 1 ein Schaltbild der Schaltungsanordnung nach der Erfindung;
Fig. 2 ein Schaltbild ähnlich Fig. 1 mit der Ergänzung der Möglichkeit einer Temperaturerfassung; und
Fig. 3 ein Schaltbild eines Ausführungsbeispieles, mit dem mehrere Sensoren alternierend eingelesen werden können.

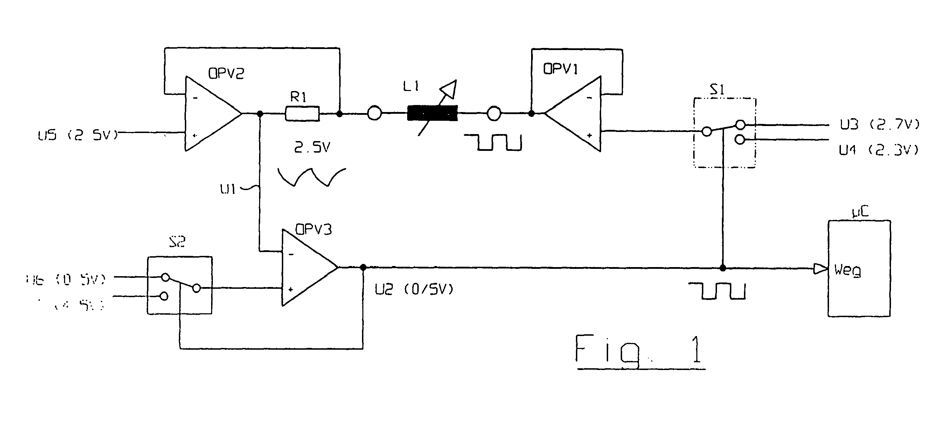

Zunächst sei auf Fig. 1 Bezug genommen. Ein induktiver Sensor L1 ändert seine Induktivität in bekannter Weise bei Verschiebung eines Ankers in eine sog. Tauchspule, so daß solche Sensoren häufig zur Wegmessung bzw. Lagemessung eingesetzt werden. Ein Anschluß des Sensors L1 ist mit einem Ausgang eines ersten Operationsverstärkers OPV1 verbunden und sein anderer Anschluß über einen Widerstand R1 mit einem zweiten Operationsverstärker OPV2. Der Ausgang des zweiten Operationsverstärkers OPV2, an dem eine Spannung U1 erscheint, ist mit einem Eingang eines dritten Operationsverstärkers OPV3 verbunden, an dessen Ausgang eine zweite Spannung U2 erscheint. Der Ausgang des ersten Operationsverstärkers OPV1 ist direkt mit dessen Minuseingang rückgekoppelt und hat dadurch die Funktion eines Spannungsfolgers. Der gemeinsame Verbindungspunkt zwischen dem Sensor L1 und dem Widerstand R1 ist mit dem Minuseingang des zweiten Operationsverstärkers OPV2 verbunden. Der Pluseingang des ersten Operationsverstärkers OPV1 ist über einen steuerbaren Schalter S1 wahlweise mit zwei vorgegebenen unterschiedlichen Spannungen U3 und U4 verbunden, die beispielsweise bei 2,7V und 2,3V liegen. Der Steuereingang des Schalters S1 ist mit dem Ausgang des dritten Operationsverstärkers OPV3 verbunden.

Am Pluseingang des zweiten Operationsverstärkers OPV2 liegt eine fünfte Spannung V5, die beispielsweise 2,5V beträgt. Der Pluseingang des dritten Operationsverstärkers OPV3 ist über einen zweiten Schalter S2 wahlweise mit zwei vorgegebenen Bezugsspannungen U6 und U7 verbindbar, die beispielsweise 0,5V bzw. 4,5v betragen. Der Ausgang des dritten Operationsverstärkers OPV3 ist auch der Signalausgang, der der Meßgröße entspricht und beispielsweise einem Mikroprozessor zugeführt wird.

Im folgenden wird die Arbeitsweise der Schaltung beschrieben. Der Sensor L1, dessen Induktivität sich in Abhängigkeit von dem zu messenden Weg ändert, liegt zwischen den beiden Operationsverstärkerausgängen OPV1 und OPV2. Der als Spannungsfolger verwendete erste Operationsverstärker OPV1 wird über den Schalter S1 wahlweise zwischen den zwei Analogspannungen U3 und U4 umgeschaltet. Der Operationsverstärker OPV2 ist so geschaltet, daß er permanent die an seinem positiven Eingang zurückgeführte Ausgangsspannung, die der Eingangsspannung U5 entspricht, an den Sensor L1 einregelt. Über dem Widerstand R1 fällt dabei eine Spannung ab, die dem durch den Sensor L1 fließenden Strom entspricht. Da der zweite Operationsverstärker OPV2 auf der Seite des Widerstandes R1, die mit dem Sensor L1 verbunden ist, ständig eine konstante Spannung ausregelt, entsteht am anderen Anschluß des Widerstandes R1, der mit dem Ausgang des Operationsverstärkers OPV2 verbunden ist, eine absolute Ausgangsspannung U1, die dem durch den Sensor L1 fließenden Strom entspricht. Durch entsprechende Dimensionierung von R1 kann der maximal gewünschte Strom durch den Sensor L1 eingestellt werden. Damit steht am linken Anschluß des Widerstandes R1, der mit dem Ausgang des Operationsverstärkers OPV2 verbunden ist, bereits die voll verstärkte Ausgangsamplitude U1 bereit.

Wird nun über den Schalter S1 an den Operationsverstärker OPV1 die Spannung U3 von beispielsweise 2,7V angelegt, so wird diese Spannung an den Ausgang des Operationsverstärkers OPV1 übertragen. Da der Sensor L1 durch den zweiten Operationsverstärker OPV2 am anderen Anschluß ständig auf die Spannung U5 von beispielsweise 2,5V gehalten wird, baut sich in der Induktivität des Sensors L1 ein magnetisches Feld auf, der anfangs geringe Strom durch den Sensor L1 wird immer größer, was eine immer kleinere Ausgangsspannung U1 zur Folge hat. Diese Spannung U1 wird auf den negativen Eingang des als Komparator betriebenen dritten Operationsverstärkers OPV3 gegeben. Am positiven Eingang des dritten Operationsverstärkers OPV3 liegt, angesteuert durch den Analogschalter S2 die konstante Spannung U6 von hier 0,5V an. Die Ausgangsspannung des dritten Operationsverstärkers OPV3 liegt damit nahe bei 0V da der negative Eingang höher ist als die Vergleichsgröße U6. Unterschreitet nun die Spannung U1 am Eingang des dritten Operationsverstärkers OPV3 diesen Wert von U6, so schaltet der Operationsverstärker OPV3 um und liefert nun am Ausgang eine Spannung, die im wesentlichen seiner Betriebsspannung entspricht und die hier bei ca. 5V liegt.

Mit dieser Ausgangsspannung U2 des dritten Operationsverstärkers OPV3 wird der Analogschalter S2 umgeschaltet und liefert damit dem Operationsverstärker OPV3 sogleich einen neuen Sollwert von U7, der hier 4,5V ist. Damit bleibt der als Komparator betriebene Operationsverstärker OPV3 stabil in seiner Ausgabestellung, da der neue Sollwert nun wesentlich größer ist als der momentane Wert an seinem negativen Eingang. Gleichzeitig schaltet der Operationsverstärker OPV3 den Analogschalter S1 um, so daß nun der Operationsverstärker OPV1 über den Schalter S1 einen neuen Spannungswert von U4 an die rechte Seite des Sensors L1 anlegt. Dadurch beginnt sich die Induktivität des Sensors L1 zu entladen, was eine Reduzierung des Spulenstromes und damit eine Erhöhung der Ausgangsspannung U1 zur Folge hat. Der Spulenstrom verringert sich bis zu seinem Nullpunkt, was einer Ausgangsspannung U1 von 2,5V entspricht. Nun beginnt sich die Spule gleichermaßen in positiver Richtung zu laden. Der anfänglich geringe Strom steigt kontinuierlich, bis die Ausgangsspannung U1 die Grenze von U7 (z.B. 4,5V) überschreitet. Dadurch kippt der Operationsverstärker OPV3 wiederum um und liefert nun wieder seine minimale Ausgangsspannung U2 von nahezu 0V ab. Somit entsteht ein selbstschwingender Oszillator, dessen Periodendauer von der Induktivität des Sensors L1 abhängt.

Da der erste Operationsverstärker OPV1 als reiner Spannungsfolger lediglich mit der Verstärkung 1 betrieben wird, ist er in der Lage, schnell und präzise zwischen den beiden Sollspannungen U3 und U4 umzuschalten. Der zweite Operationsverstärker OPV2 muß keine schnellen Spannungsänderungen ausregeln und kann damit ebenfalls als relativ ideal arbeitendes Bauelement betrachtet werden. Durch die Hochohmigkeit der Eingänge der beiden Operationsverstärker OPV1 und OPV3 entstehen an sämtlichen Umschaltern S1 und S2 keine störenden Spannungsabfälle, so daß diese ebenfalls nahezu fehlerfreie Signalpegel weitergeben können. Analoge Spannungsumschalter besitzen bekanntlich sehr kurze Umschaltzeiten, die in der Größenordnung von wenigen Nanosekunden liegen. Neben diesen beschriebenen Bauelementen wird lediglich noch der Widerstand R1 benötigt. Damit ist es möglich, eine - bezogen auf den Sensor L1 - sehr präzise arbeitende Oszillatorschaltung zu erhalten. Durch die oszillierende Betriebsweise ohne schnelles Abschalten der Induktivität des Sensors L1 entstehen im Gegensatz zu den bisher verwendeten Auswerteschaltungen an der Induktivität keine störenden Abschaltspannungsspitzen.

Zur Vergrößerung der Signalauflösung beim Einlesen in einen µC kann die am Ausgang des dritten Operationsverstärkers OPV3 erscheinende Rechteckspannung in ihrer Frequenz durch einen nachgeschalteten Zähler reduziert werden, an dessen Ausgang eine große Periodendauer erhalten wird. Mittels eines Timers in einem Mikrocontroller µC kann somit die gemessene Weginformation mit hoher Auflösung eingelesen werden. Selbst nach Subtraktion der minimalen von der maximalen Periodendauer kann damit ein Wegsignal mit einer Auflösung von z.B. 12 bis 14 Bit erfaßt werden. Manche Mikrocontroller besitzen bereits solche Zähler bzw. Frequenzteiler, so daß selbst bei hoher Oszillatorfrequenz ohne zusätzliche Bauteile eine große Signalauflösung erreicht werden kann. Auch durch interruptgesteuertes Mitzählen und Aufaddieren der einzelnen Periodendauern kann dies durch geeignete Software erreicht werden.

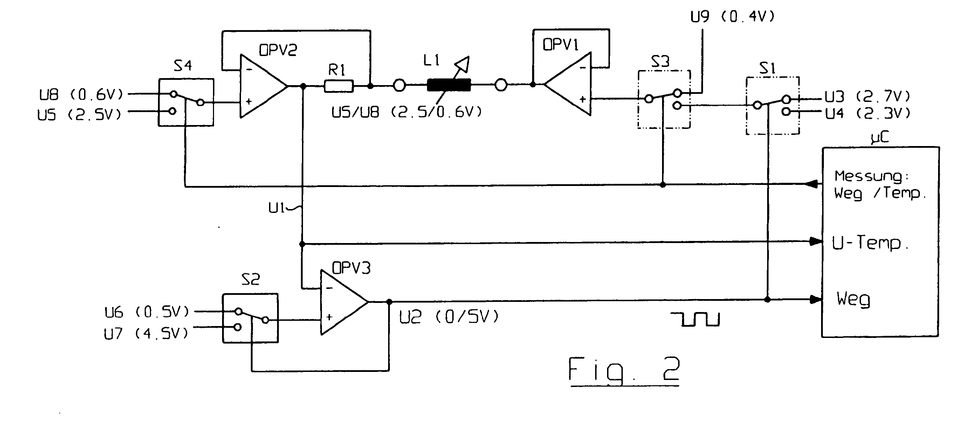

Im Ausführungsbeispiel der Fig. 2 ist der Sensor L1 in gleicher Weise wie beim Ausführungsbeispiel der Fig. 1 zwischen die beiden Operationsverstärker OPV1 und OPV2 mit dem Widerstand R1 geschaltet. Die Schaltung der Fig. 2 bietet demgegenüber aber die zusätzliche Möglichkeit, die Temperatur des Sensors L1 zu messen, um temperaturabhängige Fehler zu kompensieren. Generell arbeitet die Schaltung der Fig. 2 so, daß die Änderung des ohmschen Widerstandes des Sensors L1 gemessen wird, der wegunabhängig ist und nur von der Temperatur abhängt. Zu diesem Zwecke sind zwei weitere Schalter S3 und S4 vorgesehen. Mit dem Schalter S3 wird dem ersten Operationsverstärker OPV1 wahlweise eine niedrige Spannung U9 von beispielsweise 0,4V oder die Ausgangsspannung des Schalters S1 mit den Spannungen U3 und U4, die im hier gezeigten Ausführungsbeispiel 2,7V und 2,3 V betragen, zugeführt. Über den Schalter S4 wird dem zweiten Operationsverstärker OPV2 wahlweise eine Spannung U5 oder U8 zugeführt, wobei U5 dem Spannungswert des Beispieles der Fig. 1 entspricht und U8 kleiner ist und hier beispielsweise 0,6V beträgt. Die Steuereingänge der Schalter S3 und S4 werden gemeinsam von einem Mikrocontroller µC gesteuert. Durch ein Signal zum Umschalten der Schalter S3 und S4 wird zwischen der Wegmessung und einer Temperaturmessung umgeschaltet. Die Wegmessung erfolgt in gleicher Weise wie beim Ausführungsbeispiel der Fig. 1 und braucht deswegen hier nicht mehr beschrieben zu werden. Bei der Temperaturmessung wird auf beiden Seiten des Sensors L1 eine konstante Spannung eingestellt, bis der Spulenstrom seinen Maximalwert erreicht und damit über dessen Spannungsabfall der ohmsche Innenwiderstand der Spule L1 in Form der Spannung U1 abgelesen und einem Analogeingang eines Mikrocontrollers zugeführt werden kann. Die Ausgangsspannung des ersten Operationsverstärkers OPV1 wird dabei auf die niedrige Spannung U9 eingestellt, ohne dessen Aussteuerfähigkeit zu gefährden. Die vom zweiten Operationsverstärker eingeregelte Spannung U8 ist ebenfalls niedrig gewählt und liegt nur geringfügig über der Spannung U9 (hier bei 0,6V), so daß bei maximaler Temperatur des Sensors L1 und gegebenem Widerstandswert R1 die analoge Ausgangsspannung U1 noch innerhalb des maximal gültigen Spannungswertes des Operationsverstärkers OPV2 und dem analogen Rechnereingang liegt. Wird für die Auswerteschaltung ein Mikrocontroller benutzt, der einen fest programmierbaren Speicher (z.B. EEPROM oder Flash) besitzt, so kann am Ende des Herstellungsprozesses ein Temperatur-Offset-Wert im Rechner abgelegt und damit das Temperatursignal noch genauer erfaßt werden. Die Temperaturmessung erfolgt alternierend mit der Wegmessung durch ein Steuersignal an den Steuereingängen der Schalter S3 und S4.

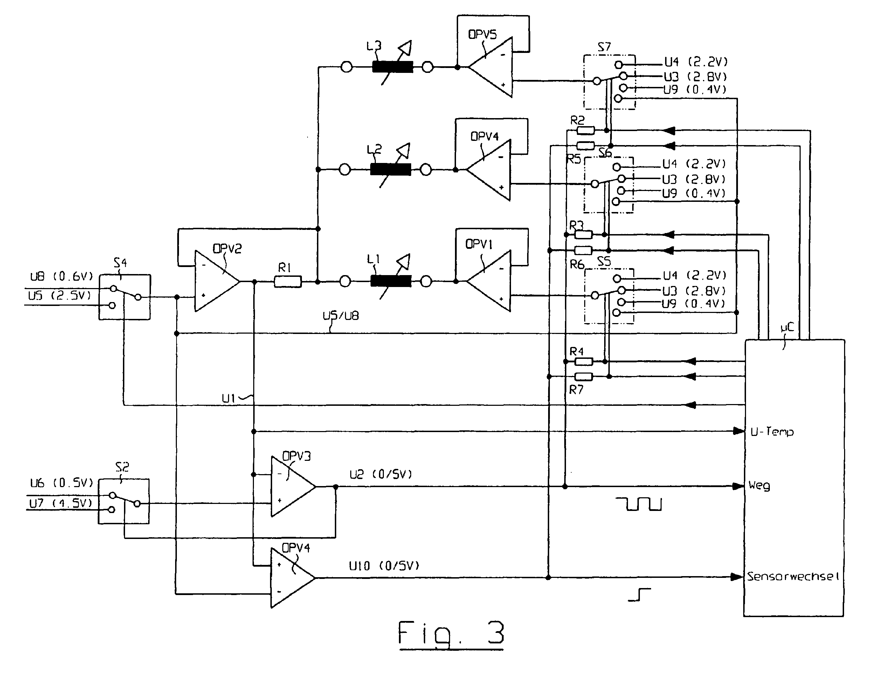

Mit der Schaltung der Fig. 3 können mehrere Sensoren L1, L2 und L3 unter Mitbenutzung bereits bestehender Schaltungsteile, wie z.B. den Operationsverstärkern OPV2 und OPV3, dem Widerstand R1 und den Schaltern S2 und S4 eingelesen werden, wobei die Zahl der Sensoren beliebig erweiterbar ist. Alle Sensoren L1 bis L3 sind mit ihrem einen Anschluß gemeinsam mit dem Widerstand R1 verbunden und mit ihrem anderen Anschluß mit einem jeweils zugeordneten Operationsverstärker OPV1, OPV4 bzw. OPV5, dessen negativer Eingang unmittelbar mit dem Ausgang verbunden ist. Die positiven Eingänge der Operationsverstärker OPV1, OPV4 und OPV5 sind mit zugeordneten Schaltern S5, S6 bzw. S7 verbunden, die jeweils vier mögliche Stellungen haben. In drei dieser möglichen Stellungen sind ihre Ausgänge und damit die Eingänge der Operationsverstärker OPV1, OPV4 und OPV5 jeweils mit einer der vorgegebenen Bezugsspannungen U3, U4 oder U9 verbunden.

In der vierten Stellung sind sie mit dem positiven Eingang des Operationsverstärkers OPV2 verbunden, so daß in dieser Stellung an beiden Seiten des jeweiligen Sensors L1, L2 oder L3 dieselbe Spannung anliegt, so daß kein Strom in den Knotenpunkt zwischen dem Widerstand R1 und den Sensoren L1, L2 bzw. L3 eingespeist wird. Damit ist der jeweilige Sensor deaktiviert. Die zwischen dem Schalter S4 und dem Operationsverstärker OPV2 anliegende Sollspannung wird damit über die Analogschalter S5, S6 und S7 auf die andere Seite aller nicht benutzten Sensoren L1, L2 bzw. L3 angelegt. Um sicherzustellen, daß die jeweils nicht aktivierten Sensoren L1, L2 oder L3 komplett entladen sind, bevor sie deaktiviert werden, ist ein als Komparator geschalteter Operationsverstärker OPV4 vorgesehen, der so angeschlossen ist, daß seine Schaltspannung genau dann erreicht wird, wenn beiderseits des Widerstandes R1 derselbe Spannungspegel ansteht. Dies ist nur dann der Fall, wenn durch R1 kein Strom fließt, an R1 also kein Spannungsabfall vorhanden ist. Damit erzeugt der Operationsverstärker OPV4 mit seiner Ausgangsspannung U10 genau dann einen Flankenwechsel am Ausgang, wenn die Sensoren komplett entladen sind. Dadurch wird erreicht, daß genau in diesem Moment einer der ausgewählten Schalter S5, S6 oder S7 des jeweils aktiven Sensors seine Eingangsspannung (U5) an den jeweiligen Operationsverstärker OPV1, OPV5 oder OPV4 weitergibt. Dann fließt durch den zuvor komplett entladenen Sensor auch weiterhin kein Strom.

Es ist auch möglich, die Spannung U10 flankengetriggert in den Mikrocontroller einzulesen und dann von diesem die Schalter S5 bis S7 zu betätigen. Schneller ist der Vorgang aber, wenn, wie in Fig. 3 dargestellt, der Operationsverstärker OPV4 über die Widerstände R5, R6 oder R7 die Schalter S5, S6 oder S7 unmittelbar betätigt, da somit in minimaler Verzögerungszeit ein Sensor abgeschaltet werden kann. Damit ist auch sichergestellt, daß der abzuschaltende Sensor schnell und absolut vollständig entladen ist und durch dieselbe Spannung an seinen beiden Anschlüssen deaktiviert ist. Für ein schnelles Abschalten der Sensoren wird der Mikrocontroller somit nicht benötigt.

Andererseits kann die Steuerung der Schalter S5, S6 und S7 sowie auch des Schalters S4 über ein Steuersignal von dem Mikrocontroller µC kommen, der die Signale so aussendet, daß jeweils nur ein Sensor L1 oder L2 oder L3 ausgewertet wird. Die Steuerleitungen von dem Mikrocontroller µC zu den Schaltern S5, S6, S7 sind über zugeordnete Widerstände R2, R3 bzw. R4 mit dem Ausgang des Operationsverstärkers OPV3 verbunden, womit erreicht wird, daß die vom Operationsverstärker OPV3 stammende Spannung U2 von der Mikroprozessoradressierung überschrieben werden kann.

In gleicher Weise dienen die Widerstände R5, R6 und R7 ebenfalls dazu, daß die vom Operationsverstärker OPV4 stammende Spannung U10 von der Mikroprozessoradressierung überschrieben werden kann.

Die im Zusammenhang mit Fig. 2 beschriebene Temperaturerfassung wird in der gleichen Weise durchgeführt, wobei die Aktivierung der Temperaturerfassung ebenfalls von dem Mikrocontroller µC eingeleitet wird, wobei auch hier sichergestellt ist, daß jeweils nur die Temperatur eines ausgewählten Sensors erfaßt wird.

Zusammenfassend erreicht man mit der Erfindung folgende Vorteile:
- Hohe Genauigkeit und Stabilität eines induktiv erfaßten Wegsignals;
- geringere Materialkosten;
- hohe Stabilität des Oszillators, da die verwendeten Bauteile nahezu ideal betrieben werden;
- keine störenden Abschaltspannungen an der Sensorspule;
- einfache Signalverstärkung;
- Ansteuerung der Sensorspule mit oszillierender Wechselspannung, so daß sowohl negative als auch positive Spulenladung benutzt werden können;
- hohe, an einen Mikrocontroller übertragbare Signalauflösung mit beispielsweise 16 Bit Signalbreite;
- auch Auswertung hoher Oszillatorfrequenzen durch FrequenzTeiler;
- außer OPV keine sonstigen frequenzabhängigen Bauteile;
- keine Einschwingtotzeit des Oszillators, was insbesondere nach Rückkehr von einer Messung der Sensortemperatur wichtig ist;
- einfache Applikation der Schaltung;
- gleichermaßen optimale Ausnutzung des Arbeitsbereiches der Operationsverstärker für Induktivitäts- und Temperaturerfassung.

## Patentansprüche

1. Schaltungsanordnung zur induktiven Wegmessung mit einem Sensor (L1), dessen Induktivität sich in Abhängigkeit von dem zu messenden Weg ändert, und mit einer Auswerteschaltung, an die der Sensor angeschlossen ist, wobei der Sensor (L1) zwischen einem ersten Operationsverstärker (OPV1) und einer Reihenschaltung aus einem zweiten Operationsverstärker (OPV2) und einem Widerstand (R1) geschaltet ist, wobei der erste Operationsverstärker (OPV1) wahlweise zwischen zwei vorgegebenen Spannungen (U3 und U4) umschaltbar ist und wobei der Ausgang des zweiten Operationsverstärkers (OPV2) mit einem Eingang eines Komparators (OPV3) verbunden ist, wobei das Ausgangssignal (U2) des Komparators (OPV3) die Umschaltung der Spannungen (U3, U4) des ersten Operationsverstärkers (OPV1) bewirkt und gleichzeitig das Messausgangssignal (U2) der Schaltungsanordnung ist, **dadurch gekennzeichnet,**
**daß** mit dem zweiten Operationsverstärker (OPV2) am Verbindungspunkt zwischen dem Widerstand (R1) und dem Sensor (L1) eine vorgegebene konstante Spannung (U5) einregelbar ist, und
**daß** der andere Eingang des Komparators (OPV3) zwischen zwei vorgegebenen Spannungen (U6, U7) umschaltbar ist, wobei das Ausgangssignal (U2) des Komparators (OPV3) die Umschaltung dieser Spannungen (U6, U7) bewirkt.

2. Schaltungsanordnung nach Anspruch 1, **dadurch gekennzeichnet,**
**daß** zur Umschaltung der vorgegebenen Spannungen (U3, U4; U6, U7) des ersten Operationsverstärkers (OPV1) und des Komparators (OPV3) steuerbare Schalter (S1, S2) vorgesehen sind, deren Steuereingänge je mit dem Ausgang des Komparators (OPV3) verbunden sind.

3. Schaltungsanordnung nach Anspruch 1 oder 2, **dadurch gekennzeichnet,**
**daß** ein Eingang des zweiten Operationsverstärkers (OPV2) mit dem gemeinsamen Verbindungspunkt des Widerstandes (R1) und des Sensors (L1) verbunden ist.

4. Schaltungsanordnung nach einem der Ansprüche 1 bis 3, **dadurch gekennzeichnet,**
**daß** ein Eingang des ersten Operationsverstärkers (OPV1) mit dessen Ausgang verbunden ist.

5. Schaltungsanordnung nach einem der Ansprüche 1 bis 4, **dadurch gekennzeichnet,**
**daß** zur Messung der Temperatur des Sensors (L1) an beide Anschlüsse des Sensors (L1) je eine konstante, jedoch unterschiedliche Spannung (U9, U8) angelegt wird und nach Erreichen eines konstanten Stromes durch den Sensor (L1) der Spannungsabfall am Widerstand (R1) als Meßgröße für den temperaturabhängigen, ohmschen Widerstand des Sensors (L1) ausgewertet wird.

6. Schaltungsanordnung nach Anspruch 5, **dadurch gekennzeichnet,**
**daß** zum Anlegen der konstanten, jedoch unterschiedlichen Spannungen (U9, U8) steuerbare Schalter (S3, S4) vorgesehen sind, die von einem Mikrocontroller (µC) ansteuerbar sind.

7. Schaltungsanordnung nach einem der Ansprüche 1 bis 6, **dadurch gekennzeichnet,**
**daß** mehrere Sensoren (L1...L3) mit einem Anschluß gemeinsam an den Widerstand (R1) angeschlossen sind, wobei der jeweils andere Anschluß der Sensoren (L1...L3) mit einem zugeordneten Operationsverstärker (OPV1, OPV4, OPV5) verbunden ist, dessen einer Eingang jeweils mit einem zugeordneten steuerbaren Schalter (S5, S6, S7) verbunden ist, der jeweils von einem Mikrocontroller (µC) ansteuerbar ist, wobei jeweils nur ein Sensor aktiviert ist und die übrigen Sensoren dadurch deaktiviert sind, daß an ihren beiden Anschlüssen dieselbe Spannung (U5) angelegt ist.

8. Schaltungsanordnung nach einem der Ansprüche 1 bis 6, **dadurch gekennzeichnet,**
**daß** mehrere Sensoren (L1...L3) mit einem Anschluß gemeinsam an den Widerstand (R1) angeschlossen sind, wobei der jeweils andere Anschluß der Sensoren (L1...L3) mit einem zugeordneten Operationsverstärker (OPV1, OPV4, OPV5) verbunden ist, dessen einer Eingang jeweils mit einem zugeordneten steuerbaren Schalter (S5, S6, S7) verbunden ist, der von einem Komparator (OPV4) dann so ansteuerbar ist, daß ein zu deaktivierender Sensor an seinen beiden Anschlüssen mit derselben Spannung beaufschlagt wird, wenn durch ihn kein Strom mehr fließt.

## Claims

1. A circuit arrangement for inductively measuring displacement with a sensor (L1) whose inductance changes as a function of the displacement to be measured, and having an evaluation circuit to which said sensor is connected, with said sensor (L1) being connected between a first operational amplifier (OPV1) and a series circuit constituted by a second operational amplifier (OPV2) and a resistor (R1), wherein said first operational amplifier (OPV1) is capable of being selectively switched between two predetermined voltages (U3 and U4), and wherein the output of said second operational amplifier (OPV2) is connected to an input of a comparator (OPV3), with the output signal (U2) of said comparator (OPV3) inducing the change-over of said voltage (U3, U4) of said first operational amplifier (OPV1) and being the measuring output signal (U2) of the circuit arrangement at the same time,
**characterised in**
**that** said second operational amplifier (OPV2) permits the adjustment of a predetermined constant voltage (U5) at the connecting point between said resistor (R1) and said sensor (L1), and
in that the other input of said comparator (OPV3) can be switched between two predetermined voltages (U6, U7), with the output signal (U2) of said comparator (OPV3) inducing the switchover between these voltages (U6, U7).

2. The circuit arrangement as claimed in claim 1, **characterized in that** controllable switches (S1, S2) whose control inputs are each connected to the output of the comparator (OPV3) are provided for switching the predefined voltages (U3, U4; U6, U7) of the first operational amplifier (OPV1) and of the comparator (OPV3).

3. The circuit arrangement as claimed in Claim 1 or 2, **characterized in that** an input of the second operational amplifier (OPV2) is connected to the common connecting point of the resistor (R1) and of the sensor (L1).

4. The circuit arrangement as claimed in one of Claims 1 to 3, **characterized in that** an input of the first operational amplifier (OPV1) is connected to its output.

5. The circuit arrangement as claimed in one of Claims 1 to 4, **characterized in that**, in order to measure the temperature of the sensor (L1), a respective constant but different voltage (U9, U8) is applied to the two terminals of the sensor (L1), and after a constant current has been reached by the sensor (L1) the voltage drop across the resistor (R1) is evaluated as a measured variable for the temperature-dependent, ohmic resistance of the sensor (L1).

6. The circuit arrangement as claimed in claim 5, **characterized in that** controllable switches (S3, S4) which can be actuated by a microcontroller (µC) are provided for applying the constant but different voltages (U9, U8).

7. The circuit arrangement as claimed in one of Claims 1 to 6, **characterized in that** a plurality of sensors (L1 ... L3) are connected jointly by one terminal to the resistor (R1), the respective other terminal of the sensors (L1 ... L3) being connected to an assigned operational amplifier (OPV1, OPV4, OPV5), one of whose inputs is respectively connected to an assigned, controllable switch (S5, S6, S7) which can be actuated in each case by a microcontroller (µC), with only one sensor being activated at a time while the other sensors are deactivated by application of the same voltage (U5) to their two terminals.

8. The circuit arrangement as claimed in one of Claims 1 to 6, **characterized in that** a plurality of sensors (L1 ... L3) are connected jointly by one terminal to the resistor (R1), the respective other terminal of the sensors (L1 ... L3) being connected to an assigned operational amplifier (OPV1, OPV4, OPV5), one of whose inputs is respectively connected to an assigned controllable switch (S5, S6, S7) which can then be actuated by a comparator (OPV4) in such a way that a sensor which is to be deactivated has the same voltage applied to its two terminals if a current is no longer flowing through it.

## Revendications

1. Une circuiterie à mesurer une distance par voie inductive, comprenant un détecteur (L1) dont la résistance inductive varie en fonction de la distance à mesurer, et comprenant un circuit d'évaluation, auquel est relié ledit détecteur, audit détecteur (L1) étant relié entre un premier amplificateur opérationnel (OPV1) et un montage en série constitué par un deuxième amplificateur opérationnel (OPV2) et une résistance (R1), dans lequel ledit premier amplificateur opérationnel (OPV1) est apte à être commuté à choix entre deux tensions prédéterminées (U3 et U4), et dans lequel la sortie dudit deuxième amplificateur opérationnel (OPV2) est reliée à une entrée d'un comparateur (OPV3), au signal de sortie (U2) dudit comparateur (OPV3) induisant la commutation de ladite tension (U3, U4) dudit premier amplificateur opérationnel (OPV1) et constituant le signal de mesure de sortie (U2) de la circuiterie au même temps, **caractérisé en ce**
**que** ledit deuxième amplificateur opérationnel (OPV2) permet le réglage d'une tension constante prédéterminée (U5) au point de connexion entre ladite résistance (R1) et ledit détecteur (L1), et
en ce que l'autre entrée dudit comparateur (OPV3) est commutable entre deux tensions prédéterminées (U6, U7), au signal de sortie (U2) dudit comparateur (OPV3) induisant la commutation entre ces tensions (U6, U7).

2. La circuiterie selon la revendication 1, **caractérisé en ce que** des commutateurs commandables (S1, S2), dont chacune de ses entrées de commande est reliée à la sortie respective dudit comparateur (OPV3), sont montés à commuter les tensions prédéterminées (U3, U4; U6, U7) dudit premier amplificateur opérationnel (OPV1) et dudit comparateur (OPV3).

3. La circuiterie selon la revendication 1 ou 2, **caractérisé en ce qu'**une entrée dudit deuxième amplificateur opérationnel (OPV2) est relié au point de connexion commun de ladite résistance (R1) et dudit détecteur (L1).

4. La circuiterie selon une quelconque des revendications 1 à 3, **caractérisé en ce qu'**une entrée dudit premier amplificateur opérationnel (OPV1) est reliée à la sortie du dernier.

5. La circuiterie selon une quelconque des revendications 1 à 4, **caractérisé en ce qu'**une tension constante respective, mais différente (U9, U8) est appliquée aux deux terminaux dudit détecteur (L1) pour le mesurage de la température dudit , détecteur (L1), et **en ce qu'**après l'achèvement d'un courant constant par ledit détecteur (L1), la chute de tension à travers la résistance (R1) est évalue en tant que variable mesurée pour la résistance en courant continu dudit détecteur (L1), qui dépend de la température.

6. La circuiterie selon la revendication 5, **caractérisé en ce que** des commutateurs commandables (S3, S4), qu'on peut commander moyennant un micro système de réglage (µC), sont monté afin d'appliquer les tensions constantes mais différentes (U9, U8).

7. La circuiterie selon une quelconque des revendications 1 à 6, **caractérisé en ce qu'**une pluralité de détecteurs (L1 ... L3) est relié en commun par un terminal à ladite résistance (R1), pendant que l'autre terminal respectif desdits détecteurs (L1 ... L3) est relié à un amplificateur opérationnel (OPV1, OPV4, OPV5) y affecté, dont une parmi ses entrées est reliée à un commutateur (S5, S6, S7) respectif commandable et y affecté, qu'on peut être commandé par un micro système de réglage respectif (µC), à un seul détecteur étant activé en chaque moment, pendant les autres détecteurs sont désactivés par l'application de la même tension (U5) à leurs deux terminaux.

8. La circuiterie selon une quelconque des revendications 1 à 6, **caractérisé en ce qu'**une pluralité de détecteurs (L1 ... L3) est relié en commun par un terminal à ladite résistance (R1), pendant que l'autre terminal respectif desdits détecteurs (L1 ... L3) est relié à un amplificateur opérationnel (OPV1, OPV4, OPV5) y affecté, dont une de ses entrées est reliée à un commutateur respectif (S5, S6, S7) commandable et y affecté, qui peut être ensuite commandé par un comparateur (OPV4) d'une telle manière, qu'un détecteur à désactiver présente la même tension appliquée à ses deux terminaux s'il n'y a plus un courant s'écoulant par lui.
